# EUROPEAN PATENT SPECIFICATION

(11) **EP 4 518 986 B1**
(45) Date of publication and mention of the grant of the patent: **17.06.2026**
(21) Application number: 23793460.9
(22) Date of filing: 28.07.2023
(51) Int. Cl.: A63C 19/06, A63C 19/02, A63C 19/08, A63B 61/00, A63B 61/02, A63B 71/02, B29B 7/88, B29B 9/12

(54) **MOBILE WATER SPORTS COURT**
MOBILES WASSERSPORTFELD
AIRE DE SPORTS NAUTIQUES MOBILE

(30) Priority: 29.07.2022 HU 2200109 U
(43) Date of publication of application: 12.03.2025
(73) Proprietor: Tatár, Péter, 1118 Budapest (HU)
(72) Inventor: Tatár, Péter, 1118 Budapest (HU)
(86) International application number: PCT/HU2023/050046
(87) International publication number: WO 2024/023540

(56) References cited:
- DE-A1- 2 707 366
- FR-A1- 2 740 048
- US-A- 5 615 891

## Description

This invention relates to a mobile water sports court (referred to as 'MWSC' or 'court'), which features a playing area divided by an aerial net and marked with border lines on the water's surface.

Conventional water sports courts, which use nets and border lines in the water, are usually constructed from inflatable plastic fabrics anchored in open water with heavy fastening elements. These courts generally lack adjustable court size and net height, are challenging to install, are difficult to enter and exit, and must be deflated to endure severe storms. Such a water sports court is disclosed in document FR2740048 A1 and shows a mobile water sports court, which contains :
- a net module, that can be arranged above the water surface,
- a line module that can be arranged on the water surface,
- a fixing module that can be fixed in the bed of a body of water, and
- a support module connecting the line module and the net module to the fixing module, wherein
- the net module comprises a net body, a ring connected to the net body,
- the line module comprises a rope forming the half-court line,
- the support module comprises an anchor rope, a lower support column, an anchor buoy, a centre line fixed between two lower support columns, an upper support post fixed to the lower support column with a clamping screw, a hook,
- the fixing module contains a ground anchor, where an anchor rope is connected to the ground anchor and the anchor buoy, both ends of the rope are connected to the centre line, and the rope itself is clamped to the anchor rope connected to the anchor buoy.

The objective of the present invention is to offer a court that accommodates the adaptation of various sports-not only volleyball but also badminton, beach tennis and footnet-to an aquatic environment. It supports teams of 1 to 6 players and is designed for easy setup and removal in both natural and man-made freshwater or saltwater recreational areas, providing simple and comfortable access and egress.

Rather than the conventional monolithic all-in-one structure, the MWSC employs a modular design. Each module comprises simple yet durable components that can be easily assembled, disassembled, and relocated by anyone with care, without requiring specialized training or equipment.

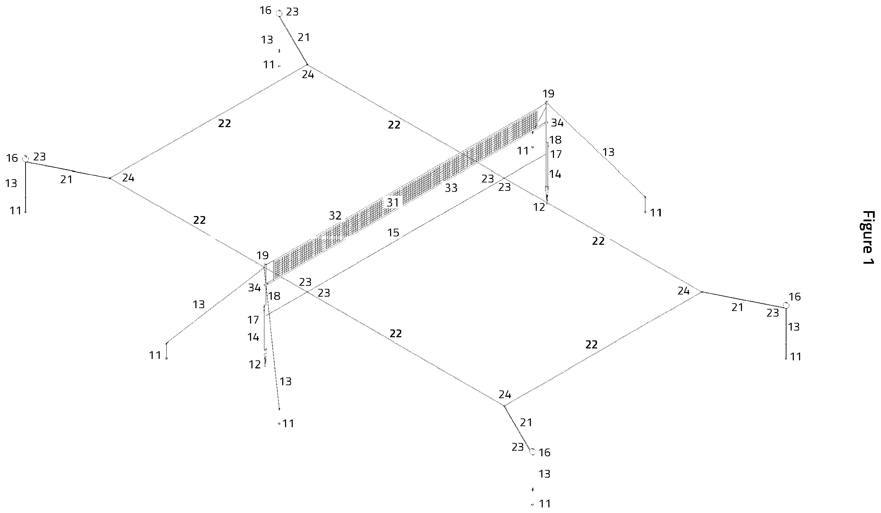

The MWSC features a robust net holding and support system, referred to as the support module (1), which is securely anchored to the water bed using ground screws (12) and anchor screws (11). This system also includes a net module (3) positioned above the water surface and a line module (2) placed on the water surface, with each module connected to distinct sections of the support module (1) *(see* *Figure 1**).*

The playing area of the MWSC is rectangular and is divided longitudinally into two equal parts known as half-courts. The outer boundaries of each half-court are delineated at the water's surface by their respective border lines (20), while the shared boundary is marked by a centerline (15), above which the net module (3) is suspended.

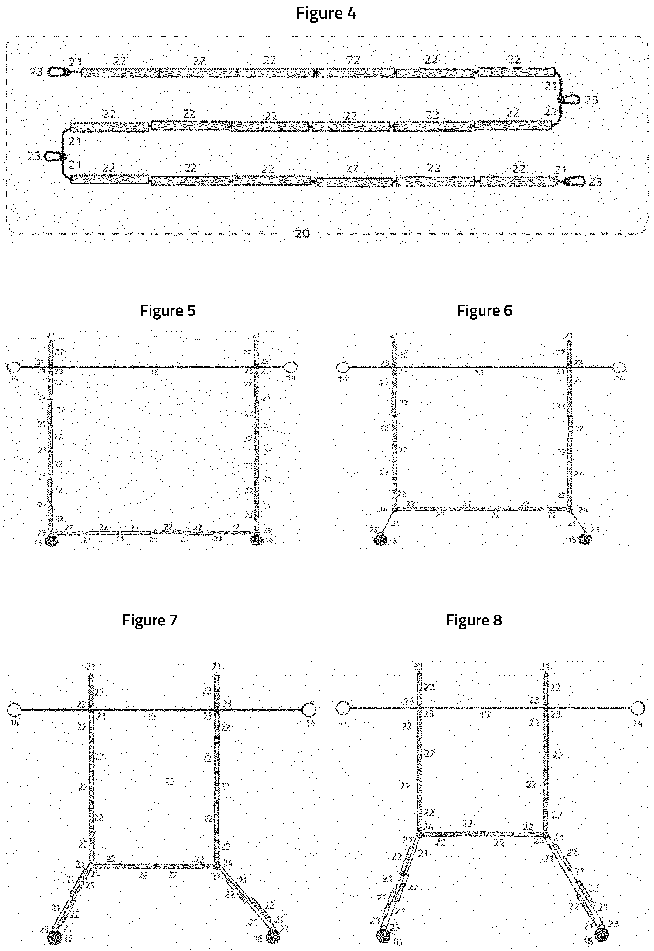

The inventive design of the line module (2) enables players to adjust the dimensions of each half-court without adding or removing components and ensures a clearly visible and dimensionally stable court layout, even in significant waves *(see* *Figures 4, 5, 6, 7, and 8**).*

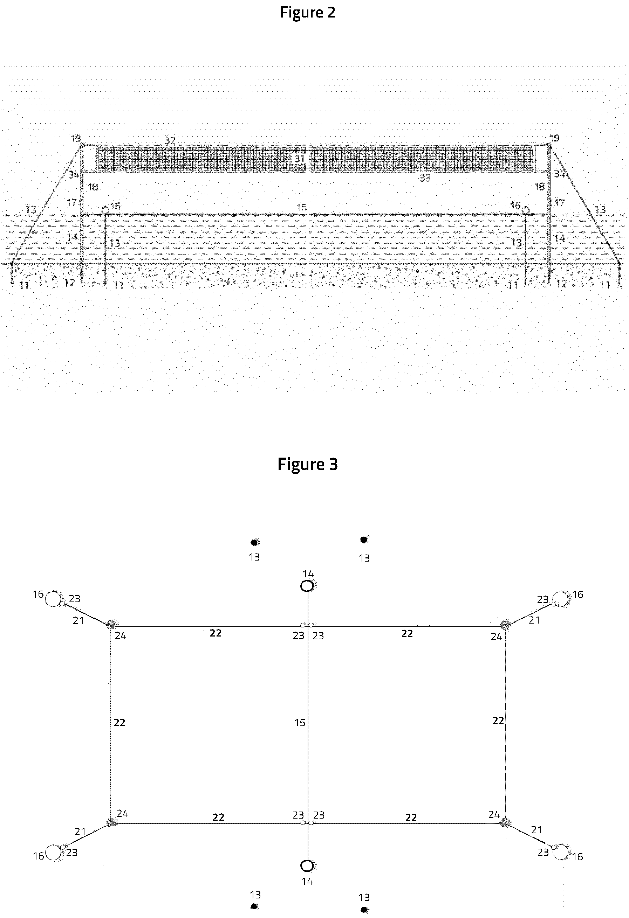

The net height can be adjusted in incremental steps due to the interlocking net support pillars (14, 18) and the sliding attachment (34) of the lower holder cable (33) *(see* *Figure 2**).* Additionally, the original width of the net can be reduced by lifting the lower holder cable (33) by raising the sliding hanging hooks (34) on the support pillars (14, 18).

Both the line module (2) and net module (3) are designed to withstand the forces of moderate storms effectively. However, in severe conditions, they can be quickly removed and secured due to their mobile design. This leaves only the elements of the support module (1) in the water, which offers minimal resistance to natural forces.

### In the drawings:

Figure 1 is a comprehensive overview of the court displaying all elements.
Figure 2 displays the components of the support (1), line (2), and net (3) modules in three different environments: soil, water, and air, along with their connections, whereas Figure 3 depicts the elements of the support module (1) and the line module (2) as they appear on the water surface.
Figure 4 illustrates the structure of the border lines (20), while Figures 6 to 8 demonstrate various half-court sizes using the corner clips (24).
Figure 5 depicts an 'unofficial' half-court configuration where no corner clips (24) are used, resulting in side lines and the baseline that are not precisely measurable.
Figure 9 is an enlarged image of the lower left third of Figure 8, intended to illustrate the connection between the line module (2) and the support module (1) at one corner of the court.
Figure 10 is an enlarged image of the lower left-hand corner of Figure 9, intended to illustrate the detachable connection between the corner clip (24) and the elastic rope (21).
Figure 11 is an enlarged image of the middle of Figure 10, illustrating the functional parts of a corner clip (24).

*The modules of the invention are not shown directly in the drawings; instead, their components are depicted Elements with reference numbers between 11 and 19 are part of the support module (1), those between 20 and 24 belong to the line module (2), and those between 31 and 34 are associated with the net module (3).*

### DESCRIPTION

The mobile water sports court is anchored to the water bed using eight anchor screws (11) and two ground screws (12). Two lower support pillars (14) are fitted into the ground screws (12) and secured with clamping screws to allow for releasable connections. Upper support pillars (18) are then inserted into these lower pillars (14) and fastened with clamping screws (17) to provide adjustable connections.

Each upper support pillar (18) is outfitted with a hanging hook (19) at the top and a sliding hook (34) to accommodate the upper holder cable (32) and lower holder cable (33) of the net module (3) respectively.

Additionally, two border lines (20) are used to connect four anchor buoys (16) positioned at the court's corners to the centerline (15) between the two lower support pillars (14) on the water's surface. All connections utilize releasable carabiners (23) *(see* *Figure 1**,* *2, and 3**).*

Anchor screws (11), evenly spaced from each lower support pillar (14), are installed into the lake, seabed, or attached to the bottom of a pool. These anchor screws (11) serve as anchor points for the anchor ropes (13), which attach to hanging hooks (19) secured to the upper support pillars (18) using releasable fastenings. This setup ensures tension in both the lower (14) and upper (18) support pillars, thereby maintaining tension in the net module (3) *(see* *Figure 2, and 3**).*

At each corner of the court, additional anchor screws (11) are installed into the lake or seabed, or secured to the bottom of the pool. These anchor screws (11) support anchor buoys (16) floating above them, connected by elastic or adjustable anchor ropes (13). The anchor buoys (16), along with the centerline (15), are attached to the border lines (20) via carabiners (23), ensuring that the line module (2) remains at the water's surface in the desired position of the MWSC *(see* *Figure 2, 3**, and* *9**).*

Each border line (20) is made from an elastic rope (21) equipped with releasable carabiners (23) at both ends and at one-third and two-thirds of its length. Border line markers (22), cylindrical with a central hole, are threaded onto the elastic rope (21) between the carabiners (23), ensuring comprehensive coverage along the rope's length when it is not under tension *(see* *Figure 4**).*

Corner clips (24) are strategically placed along the border lines (20) to mark the rear corner points of each half-court. The front corner points align with the locations where the front carabiners (23) of the border lines (20) are attached to the centerline (15) *(see* *Figures 3**,* *6, 7, 8* *and* *9**).*

To position a corner clip (24) on the border lines (20), thread it onto the elastic rope (21) at a specific point between selected border line markers (22) creating segments of the border lines (20) *(see* *Figures 6,7,8**,* *9 and 10**).*

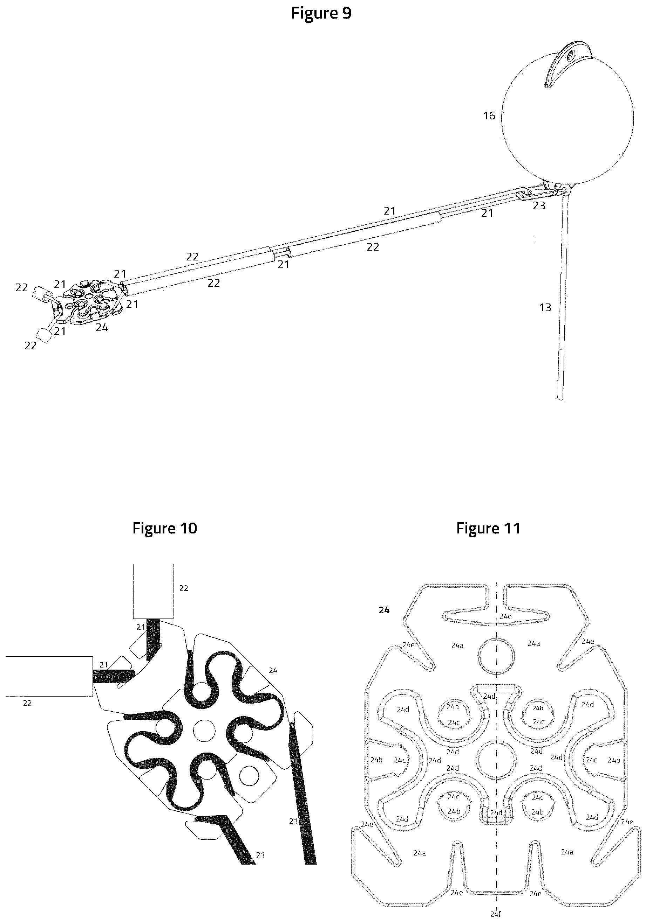

For stable positioning, each corner clip (24) must have at least four fastening elements, with the elastic rope (21) secured to a minimum of two of these elements. Each fastening element consists of a central body (24b) and a surrounding surface (24d) that partially encircles the central body, both extending from the base plate (24a) *(see* *Figure 10, and 11**).*

To ensure a secure grip on the elastic rope (21), the central body (24b) of each corner clip's (24) fastening element must have roughened surfaces (24c) facing the surrounding surface (24d). Additionally, the corner clips (24) should have lacing grooves (24e) in the base plate (24a) through which the elastic rope (21) should be threaded *(see* *Figure 11**).*

For optimal security, the elastic rope (21) should be threaded through all the lacing grooves (24e) and positioned in the gaps between the roughened surfaces (24c) and the surrounding surfaces (24d) of each fastening element of the corner clip (24) *(see* *Figure 10**).*

Threading the corner clips (24) onto the elastic rope (21) creates five sections of the border lines (20) as follows. Section 1 extends from the first carabiner (23) attached to the centerline (15) to the first corner clip (24), forming one side line of the half-court. Section 2 is positioned between the two corner clips (24) and serves as the baseline of the half-court. Section 3 starts at the second corner clip (24) and extends to the second carabiner (23) attached to the centerline (15), forming the opposite side line of the half-court. Sections 4 and 5 are located between corner clips (24) and carabiners (23) attached to the anchor buoys (16) along the same border lines (20). Section 4 and 5 are not part of the half-court *(see* *Figures 6, 7, and 8**).*

By creating the other half-court in the same way, the playing area of the MWSC is complete *(see* *Figure* 1).

### List of components

The following table provides a comprehensive list of MWSC components, organized by reference sign (REF) as shown in the drawings section and by the terminology (NAME) used in the text of this application. The components are categorized by module (MODULE) and may include additional relevant information (NOTE).

| REF | NAME | MODULE | NOTE |
|---|---|---|---|
| 1 | Support module | Support | A name for the joint reference of the components used to fix the elements of the court to the water bed and to hold and support the net (3) and line module (2) |
| 2 | Line module | Line | A term used to collectively name the 2 pcs of border lines (20) and their components |
| 3 | Net module | Net | The name used to refer to the net and its components together |
| 11 | Anchor screw | Support | The underwater attachment points of the anchor ropes (11) to the lake, seabed or the bottom of the pool |
| 12 | Ground screw | Support | The underwater fastening element of the lower support pillars (14) to the lake or seabed |
| 13 | Anchor rope | Support | Binding and stiffening element for strengthening the connection between anchor screws (11) and other support elements (16, 19) |
| 14 | Lower support pillar | Support | Element for hosting the upper support pillar (18) and holding the centerline (15) |
| 15 | Centerline | Support | Element contributing to keeping the line module (2) afloat |
| 16 | Anchor buoy | Support | Element contributing to keeping the line module (2) afloat |
| 17 | Clamping screws | Support | Elements for fine adjustment of the net height by fixing the sliding of the upper support pillar (18) into the lower support pillar (14) |
| 18 | Upper support pillar | Support | An element for holding and stiffening the net module (3) |
| 19 | Hanging hook | Support | An element for holding and stiffening the net module (3) |
| | | | |
| 20 | Border lines | Line | Collective name for the components used to hold and display a half-court |
| 21 | Elastic rope | Line | An element contributing to keeping a half-court on the water surface |
| 22 | Border line marker | Line | An element contributing to marking a half-court on the water surface |
| 23 | Carabiner | Line | An element contributing to keeping a half-court in place |
| 24 | Corner clip | Line | Define the dimensions of a half-court |
| 31 | Net body | Net | An element for displaying spatial delimitation in the air |
| 32 | Upper holder cable | Net | An element for solidification of the space delimitation in the air |
| 33 | Lower holder cable | Net | An element for solidification of the space delimitation in the air |
| 34 | Sliding hook | Net | An element for solidification of the space delimitation (31) in the air |

Although the invention has been explained in relation to its preferred embodiment(s) as mentioned above, it is to be understood that many other possible modifications and variations can be made without departing from the scope of the present invention. It is, therefore, contemplated that the appended claim or claims define the invention.

## Claims

1. A mobile water sports court comprises several key components: a net module (3) positioned above the water surface, a line module (2) situated on the water surface, fixing elements (11, 12) anchored to the water bed, and additional support module (1) elements that connect the line module (2) and the net module (3) to the fixing elements (11, 12) of the support module (1).
The support module (1) comprises anchor screws (11), ground screws (12), anchor ropes (13), lower support pillars (14), a centerline (15) fixed between two lower support pillars (14), anchor buoys (16), upper support pillars (18) secured to the lower support pillars (14) with clamping screws (17), and hanging hooks (19) fixed to the upper support pillars (18) with screws. Anchor ropes (13) connect the anchor screws (11) to anchor buoys (16) or to hanging hooks (19).
The line module (2) includes two elastic ropes (21) that form the framework of the border lines (20). Each rope (21) is covered by border line markers (22), cylindrical in shape with a central hole, encase each elastic rope (21) and is equipped with carabiners (23) and corner clips (24) at each half-court corner. Each end of the elastic rope (21) connects to the centerline (15), and the rope itself (21) is secured to the anchor ropes (13) connected to the anchor buoys (16) via the carabiners (23).
The net module features a net body (31) with upper (32) and lower (33) holder cables, along with two sliding hanging rings (34) connected to the net body (31). The lower holder cable (33) of the net body (31) connects to the sliding hanging rings (34), which move along the support pillars (18). The upper holder cable (32) connects to the hooks (19) fixed on the upper support pillars (18). Furthermore, additional hanging hooks (19) are affixed to the upper support pillars (18), to which anchor ropes (13), secured to anchor screws (11), are connected, serving as tension cables.

2. The mobile water sports court as described in claim 1 features a rectangular shape, where elastic ropes (21) of the line module (2) are encased in cylindrical border line markers (22) with a central hole. These markers (22) cover each elastic rope (21), forming the border lines (20) along the sides of the rectangle. These border lines (20) connect to the centerline (15) and to respective anchor buoys (16) via carabiners (23), which are in turn connected to anchor ropes (13). These anchor ropes (13) are attached to anchor screws (11) secured into the water bed.

3. The mobile water sports court described in claim 1 includes sections of the border lines (20) secured by corner clips (24) threaded onto the elastic ropes (21). These sections form five distinct segments of the border lines (20): the first two segments are positioned between corner clips (24) and carabiners (23) attached to the centerline (15); the third segment is located between two corner clips (24) along the same border lines (20); and the fourth and fifth segments are situated between corner clips (24) and carabiners (23) attached to the anchor buoys (16) along the same border lines (20). Together, the first three segments of the border lines (20) define one half-court of the mobile water sports court.

4. The mobile water sports court according to claim 3 features corner clips (24) consisting of a base plate (24a) with symmetrical fastening elements along its centerline (24f).

5. The mobile water sports court as described in claim 4 includes a base plate (24a) with a minimum of four fastening elements, with elastic rope (21) sections secured to at least two of these elements.

6. The mobile water sports court according to claim 5 features each fastening element comprising a central body (24b) and a surrounding surface (24d) that partially encircles the central body (24b), both extending from the base plate (24a).

7. The mobile water sports court as described in claim 6 is **characterized by** roughened surfaces (24c) on the central body (24b) facing the surrounding surface (24d), and lacing grooves (24e) formed on the base plate (24a).

## Patentansprüche

1. Ein mobiler Wassersportplatz umfasst mehrere Schlüsselkomponenten: ein über der Wasseroberfläche positioniertes Netzmodul (3), ein auf der Wasseroberfläche befindliches Leinenmodul (2), am Gewässergrund verankerte Befestigungselemente (11, 12) sowie zusätzliche Elemente des Stützmoduls (1), die das Leinenmodul (2) und das Netzmodul (3) mit den Befestigungselementen (11, 12) des Stützmoduls (1) verbinden.
Das Stützmodul (1) umfasst Ankerschrauben (11), Erdschrauben (12), Ankerleinen (13), untere Stützsäulen (14), eine zwischen zwei unteren Stützsäulen (14) befestigte Mittellinie (15), Ankerbojen (16), obere Stützsäulen (18), die mit Klemmschrauben (17) an den unteren Stützsäulen (14) befestigt sind, sowie Aufhängehaken (19), die mit Schrauben an den oberen Stützsäulen (18) befestigt sind. Ankerleinen (13) verbinden die 10 Ankerschrauben (11) mit Ankerbojen (16) oder mit Aufhängehaken (19).
Das Leinenmodul (2) umfasst zwei elastische Seile (21), die das Gerüst der Begrenzungsleinen (20) bilden. Jedes Seil (21) ist von Begrenzungsleinenmarkierungen (22) ummantelt, die zylindrisch geformt sind, eine zentrale Bohrung aufweisen, jedes elastische Seil (21) umschließen und an jeder Halbfeldecke mit Karabinern (23) und Eckclips (24) ausgestattet sind. Jedes Ende des elastischen Seils (21) ist mit der Mittellinie (15) verbunden, und das Seil selbst (21) ist über die Karabinerhaken (23) an den Ankerseilen (13) befestigt, die mit den Ankerbojen (16) verbunden sind.
Das Netzmodul umfasst einen Netzkörper (31) mit einem oberen (32) und einem unteren (33) Haltekabel sowie zwei verschiebbare Aufhängeringe (34), die mit dem Netzkörper (31) verbunden sind. Das untere Haltekabel (33) des Netzkörpers (31) ist mit den verschiebbaren Aufhängeringen (34) verbunden, die sich entlang der Stützsäulen (18) bewegen. Das obere Halteseil (32) ist mit den an den oberen Stützsäulen (18) befestigten Haken (19) verbunden. Darüber hinaus sind 20 zusätzliche Aufhängehaken (19) an den oberen Stützsäulen (18) angebracht, an denen Ankerleinen (13), die an Ankerschrauben (11) befestigt sind, als Spannseile dienen.

2. Der mobile Wassersportplatz nach Anspruch 1 weist eine rechteckige Form auf, wobei elastische Seile (21) des Leinenmoduls (2) in zylindrischen Begrenzungsmarkierungen (22) mit einer zentralen Öffnung eingefasst sind. Diese Markierungen (22) umschließen jedes elastische Seil (21) und bilden die Begrenzungslinien (20) entlang der Seiten des Rechtecks. Diese Begrenzungslinien (20) sind über Karabinerhaken (23) mit der Mittellinie (15) und den jeweiligen Ankerbojen (16) verbunden, die wiederum mit Ankerleinen (13) verbunden sind. Diese Ankerleinen (13) sind an Ankerschrauben (11) befestigt, die im Gewässergrund verankert sind.

3. Der mobile Wassersportplatz nach Anspruch 1 umfasst Abschnitte der Begrenzungsleinen (20), die durch an den elastischen Seilen (21) befestigte Eckklammern (24) gesichert sind. Diese Abschnitte bilden fünf separate Segmente der Begrenzungsleinen (20): Die ersten beiden Segmente befinden sich zwischen Eckklammern (24) und an der Mittellinie (15) befestigten Karabinern (23); das dritte Segment befindet sich zwischen zwei Eckklammern (24) entlang derselben Begrenzungslinien (20); und das vierte und fünfte Segment befinden sich zwischen Eckklammern (24) und Karabinern (23), die an den Ankerbojen (16) entlang derselben Begrenzungslinien (20) befestigt sind. Zusammen definieren die ersten drei Segmente der Begrenzungsleinen (20) eine Hälfte des mobilen Wassersportplatzes.

4. Der mobile Wassersportplatz nach Anspruch 3 weist Eckklammern (24) auf, die aus einer Grundplatte (24a) mit symmetrischen Befestigungselementen entlang ihrer Mittellinie (24f) bestehen.

5. Der mobile Wassersportplatz nach Anspruch 4 umfasst eine Grundplatte (24a) mit mindestens vier Befestigungselementen, wobei an mindestens zwei dieser Elemente Abschnitte eines elastischen Seils (21) befestigt sind.

6. Der mobile Wassersportplatz nach Anspruch 5 ist **dadurch gekennzeichnet, dass** jedes Befestigungselement einen Zentralkörper (24b) und eine umgebende Fläche (24d) umfasst, die den Zentralkörper (24b) teilweise umschließt, wobei sich beide von der Grundplatte (24a) aus erstrecken.

7. Der mobile Wassersportplatz nach Anspruch 6 ist **dadurch gekennzeichnet, dass** der Zentralkörper (24b) gegenüber der Umfangsfläche (24d) mit aufgerauten Oberflächen (24c) versehen ist und dass an der Grundplatte (24a) Schnürnuten (24e) ausgebildet sind.

## Revendications

1. Une aire de sports nautiques mobile comprend plusieurs composants clés : un module de filet (3) positionné au-dessus de la surface de l'eau, un module de ligne (2) situé sur la surface de l'eau, des éléments de fixation (11, 12) ancrés au lit de l'eau, et des éléments de module de support (1) supplémentaires qui relient le module de ligne (2) et le module de filet (3) aux éléments de fixation (11, 12) du module de support (1).
Le module de support (1) comprend des vis d'ancrage (11), des vis de terre (12), des cordes d'ancrage (13), des piliers de support inférieurs (14), une ligne centrale (15) fixée entre deux piliers de support inférieurs (14), des bouées d'ancrage (16), des piliers de support supérieurs (18), fixés aux piliers de support inférieurs (14) avec des vis de serrage (17), ainsi que des crochets de suspension (19) fixés aux piliers de support supérieurs (18) avec des vis. Des cordes d'ancrage (13) relient les 10 vis d'ancrage (11) aux bouées d'ancrage (16) ou aux crochets de suspension (19).
Le module de ligne (2) comprend deux cordes élastiques (21) qui forment le cadre des lignes de délimitation (20). Chaque corde (21) est enveloppée par des marqueurs de ligne de délimitation (22), de forme cylindrique, présentant un alésage central, entourant chaque corde élastique (21) et équipée de mousquetons (23) et de clips d'angle (24) à chaque coin de demi-terrain. Chaque extrémité de la corde élastique (21) est reliée à la ligne centrale (15), et la corde elle-même (21) est fixée via les mousquetons (23) aux cordes d'ancrage (13) reliées aux bouées d'ancrage (16).
Le module de filet comprend un corps de filet (31) avec un câble de maintien supérieur (32) et un inférieur (33) ainsi que deux anneaux de suspension coulissants (34) reliés au corps de filet (31). Le câble de maintien inférieur (33) du corps de filet (31) est relié aux anneaux de suspension coulissants (34) qui se déplacent le long des piliers de support (18). Le câble de maintien supérieur (32) est relié aux crochets (19) fixés sur les piliers de support supérieurs (18). De plus, 20 crochets de suspension (19) supplémentaires sont apposés sur les piliers de support supérieurs (18), auxquels des cordes d'ancrage (13), fixées aux vis d'ancrage (11), servent de câbles de tension.

2. L'aire de sports nautiques mobile selon la revendication 1 présente une forme rectangulaire, dans laquelle des cordes élastiques (21) du module de ligne (2) sont enserrées dans des marqueurs de délimitation cylindriques (22) avec une ouverture centrale. Ces marqueurs (22) entourent chaque corde élastique (21) et forment les lignes de délimitation (20) le long des côtés du rectangle. Ces lignes de délimitation (20) sont reliées via des mousquetons (23) à la ligne centrale (15) et aux bouées d'ancrage (16) respectives, lesquelles sont à leur tour reliées à des cordes d'ancrage (13). Ces cordes d'ancrage (13) sont fixées à des vis d'ancrage (11) ancrées au lit de l'eau.

3. L'aire de sports nautiques mobile selon la revendication 1 comprend des sections des lignes de délimitation (20) sécurisées par des clips d'angle (24) fixés aux cordes élastiques (21). Ces sections forment cinq segments distincts des lignes de délimitation (20) : les deux premiers segments se situent entre les clips d'angle (24) et les mousquetons (23) fixés à la ligne centrale (15) ; le troisième segment se situe entre deux clips d'angle (24) le long des mêmes lignes de délimitation (20) ; et les quatrième et cinquième segments se situent entre les clips d'angle (24) et les mousquetons (23) fixés aux bouées d'ancrage (16) le long des mêmes lignes de délimitation (20). Ensemble, les trois premiers segments des lignes de délimitation (20) définissent une moitié de l'aire de sports nautiques mobile.

4. L'aire de sports nautiques mobile selon la revendication 3 présente des clips d'angle (24) constitués d'une plaque de base (24a) avec des éléments de fixation symétriques le long de sa ligne centrale (24f).

5. L'aire de sports nautiques mobile selon la revendication 4 comprend une plaque de base (24a) avec au moins quatre éléments de fixation, des sections d'une corde élastique (21) étant fixées à au moins deux de ces éléments.

6. L'aire de sports nautiques mobile selon la revendication 5 est **caractérisée par le fait que** chaque élément de fixation comprend un corps central (24b) et une surface environnante (24d) qui entoure partiellement le corps central (24b), les deux s'étendant à partir de la plaque de base (24a).

7. L'aire de sports nautiques mobile selon la revendication 6 est **caractérisée par le fait que** le corps central (24b) est pourvu de surfaces rugueuses (24c) face à la surface périphérique (24d) et que des rainures de laçage (24e) sont formées sur la plaque de base (24a).
